# EUROPÄISCHE PATENTSCHRIFT

(11) **EP 4 188 818 B1**
(45) Veröffentlichungstag und Bekanntmachung des Hinweises auf die Patenterteilung: **30.07.2025**
(21) Anmeldenummer: 21739529.2
(22) Anmeldetag: 21.06.2021
(51) Int. Cl.: B65D 19/00, C08J 9/00, C08J 9/04, C08L 23/04, C08L 23/10

(54) **HOLZ-KUNSTSTOFF-VERBUNDWERKSTOFF**
WOOD-PLASTIC COMPOSITE MATERIAL
MATÉRIAU COMPOSITE BOIS-PLASTIQUE

(30) Priorität: 27.07.2020 AT 506402020
(43) Veröffentlichungstag der Anmeldung: 07.06.2023
(73) Patentinhaber: Haubner, Alexander, 4040 Linz (AT)
(72) Erfinder: BURGSTALLER, Christoph, 4600 Wels (AT); HAUBNER, Alexander, 4040 Linz (AT)
(74) Vertreter: Hübscher & Partner Patentanwälte GmbH
(86) Internationale Anmeldenummer: PCT/AT2021/060214
(87) Internationale Veröffentlichungsnummer: WO 2022/020868

(56) Entgegenhaltungen:
- EP-A2- 2 247 653
- WO-A1-02/088233
- CN-A- 108 178 870
- CN-B- 106 700 262
- US-B2- 9 238 731

## Beschreibung

### Technisches Gebiet

Die Erfindung bezieht sich auf einen Holz-Kunststoff-Verbundwerkstoff für miteinander vernagelbare Strukturbauteile von Transportpaletten, mit einer mittels eines Triebmittels geschäumten Matrix, Holzmehlfasern und einem Haftvermittler.

Vor dem Hintergrund nachhaltiger Entwicklungen sowie gesteigerter Ressourceneffizienz besteht ein Bedarf, an den Europool-Standard angelehnte Transportpaletten auf Basis eines Werkstoffes zu fertigen, der hinsichtlich Gewicht, mechanischer Festigkeitseigenschaften, Herstell- und Verarbeitbarkeit sowie Kosteneffizienz mit den bislang eingesetzten Weichholzwerkstoffen zumindest vergleichbar oder jenen Weichholzwerkstoffen bestenfalls überlegen ist und der aus Gründen der Kundenakzeptanz dennoch eine gewisse Holzoptik aufweist. Damit zudem ein wirtschaftlicher Fertigungsprozess der Transportpaletten sichergestellt ist, müssen die entsprechenden Strukturbauteile insbesondere mittels Druckluft- oder Stauchkopfnagler so miteinander vernagelbar sein, dass keine Bauteilschäden entstehen und eine zuverlässige Funktion der Transportpalette ermöglicht wird.

### Stand der Technik

Aus dem Stand der Technik sind beispielsweise Holz-Kunststoff-Verbundwerkstoffe, sogenannte Wood-Polymer-Composites (WPC), bekannt (WO 2002088233 A1), die eine mittels eines Triebmittels auf Basis von Kohlendioxid geschäumte Matrix aus Polyethylen hoher Dichte (PE-HD), sowie Holzmehlfasern umfassen. Derartige Holz-Kunststoff-Verbundwerkstoffe sind allerdings aufgrund ihrer relativ spröden Beschaffenheit sowie aufgrund ihrer vergleichsweise geringen Dauerfestigkeit als Strukturbauteile von oben genannten Transportpaletten nicht geeignet, zumal solche Holz-Kunststoff-Verbundwerkstoffe zu Rissbildung zufolge eines Nagelns neigen.

### Darstellung der Erfindung

Der Erfindung liegt somit die Aufgabe zugrunde, einen Holz-Kunststoff-Verbundwerkstoff zu schaffen, der eine kosteneffiziente Fertigung von Transportpaletten in holzähnlicher Optik ermöglicht und dabei zumindest hinsichtlich Gewicht und mechanischen Festigkeitseigenschaften einen zuverlässigen Ersatz zu den bislang verwendeten Weichholzwerkstoffen darstellt.

Die Erfindung löst die gestellte Aufgabe dadurch, dass die ein langkettenverzweigtes Polyolefin umfassende Matrix einen Massenanteil von mindestens 30 %, die eine Partikelgröße von 70 - 150 µm umfassenden Holzmehlfasern einen Massenanteil von 20 - 40% und der vorzugsweise auf Maleinsäureanhydriden basierende Haftvermittler einen Massenanteil von 1 - 5 % am Holz-Kunststoff-Verbundwerkstoff aufweisen, wobei die Verbundwerkstoffdichte unter 0,3 g / cm³ beträgt.

Holzmehlfasern mit einer Partikelgröße von 70 - 150 µm würden der Ausbildung einer gleichmäßigen Schaumstruktur grundsätzlich entgegenwirken, weil die Gefahr besteht, dass die Holzmehlfasern etwaige Schaumzellen durchstechen und damit beschädigen. Höhere Massenanteile von bis zu 50% des Holzmehls, welche einer ansprechende Holzoptik zuträglich wären, sind daher nicht ohne weiteres möglich. Es hat sich jedoch überraschenderweise gezeigt, dass sich auch bei hohen Massenanteilen von 20 - 40% des Holzmehls durch den Einsatz langkettenverzweigter Polyolefine eine gleichmäßige Schaumstruktur ausbildet. Dabei werden sowohl niedrige Verbundwerkstoffdichten ermöglicht, als auch vergleichsweise hohe Festigkeitswerte zufolge der bei der Verarbeitung auftretenden, durch die Langkettenverzweigungen des Polyolefins begünstigten Dehnverfestigungseffekte erzielt. Die Dehnverfestigungseffekte lassen sich beispielsweise mittels uniaxialer Dehnrheologiemessungen nachweisen, wobei eine Erhöhung der Viskosität durch die Dehnbelastung erkennbar ist. Unter einer Langkettenverzweigung wird im Sinne der Erfindung verstanden, dass wenigstens 10% der Seitenketten des Polyolefins eine Kettenlänge von mindestens 6 Kohlenstoffatomen aufweisen. Vorzugsweise ist das Polyolefin ein Polyethylen niedriger Dichte (PE-LD bzw. LDPE) oder ein Polypropylen. Besonders günstige Eigenschaften sowie eine hohe Kosteneffizienz im Hinblick auf den Einsatz des erfindungsgemäßen Holz-Kunststoff-Verbundwerkstoffes als Strukturbauteil für Transportpaletten ergeben sich, wenn die Dichte unter 0,2 g / cm³, vorzugsweise unter 0,1 g / cm³ beträgt. Darüber hinaus kann ein erfindungsgemäßer Holz-Kunststoff-Verbundwerkstoff einen über einen ISO-178 Biegeversuch bei einer Prüfgeschwindigkeit von 1 mm / s ermittelten E-Modul von 500 bis 1000 MPa, sowie eine Biegefestigkeit von mindestens 7 MPa aufweisen. Aus dem erfindungsgemäßen Holz-Kunststoff-Verbundwerkstoff gefertigte Strukturbauteile sind demnach geeignet, den Belastungen, mit denen Transportpaletten üblicherweise beaufschlagt werden, dauerhaft standzuhalten. Zudem weist der Holz-Kunststoff-Verbundwerkstoff eine ausreichende Duktilität auf, sodass etwaige Strukturbauteile problemlos auch über Druckluft- oder Stauchkopfnagler so miteinander vernagelbar sind, dass dabei keine gefährlichen Risse in der Schaumstruktur entstehen und auch keine Splitterbildung stattfindet.

Eine günstige Kombination von niedriger Dichte, ausreichender Festigkeit und Duktilität, sowie ansprechendem holzähnlichen Erscheinungsbild kann erreicht werden, wenn die Holzmehlfasern einen Massenanteil von 25 - 35 %, insbesondere 30 %, und der Haftvermittler einen Massenanteil von 2 - 4 %, insbesondere 3 %, aufweisen.

Um trotz niedriger Verbundwerkstoffdichten von unter 0,1 g / cm³ die mechanischen Eigenschaften weiter zu verbessern, kann vorgesehen sein, dass die Matrix ein Polymerblend eines Polyolefins und wenigstens eines thermoplastischen Polymers ist, wobei der Massenanteil des wenigstens einen thermoplastischen Polymers 5 - 50% am Polymerblend beträgt und wobei das wenigstens eine thermoplastische Polymer eine Schmelztemperatur aufweist, die 20 - 70°C, vorzugsweise ca. 30°C oberhalb der Verarbeitungstemperatur des Polyolefins liegt, und / oder eine Glasübergangstemperatur aufweist, die bis zu 40°C unterhalb der Verarbeitungstemperatur des Polyolefins liegt. Zufolge dieser Merkmale wird der bei der Verarbeitung aufgrund der Langkettenverzweigung auftretende Dehnverfestigungseffekt weiter verstärkt, wobei insgesamt die Schmelzflussrate für günstige Verarbeitungsbedingungen ausreichend bleibt.

In diesem Zusammenhang empfiehlt es sich, wenn das wenigstens eine thermoplastische Polymer ein thermoplastisches Polykondensat ist. Vorzugsweise kann das Polykondensat ein Polyamid und / oder ein thermoplastischer Polyester sein. Besonders bevorzugt kann das Polykondensat ein Polyamid 6, ein Polycarbonat, ein Polyethylenterephthalat und / oder ein Polybutylenterephthalat sein.

Die Erfindung bezieht sich auch auf ein Verfahren zur Herstellung eines erfindungsgemäßen Holz-Kunststoff-Verbundwerkstoffes über einen zweistufigen Schneckenextrusionsprozess. Dabei werden in einem ersten Schritt zunächst die Matrixschmelze, die Holzmehlfasern und der vorzugsweise auf Maleinsäureanhydrid basierende Haftvermittler zu einer Verbundwerkstoffschmelze vermengt. Anschließend wird die Verbundwerkstoffschmelze in einem zweiten Schritt bei einer Massetemperatur zwischen 170 und 200 °C und bei einem Massedurchsatz von 5 bis 15 kg / Stunde homogenisiert und extrudiert, wobei der Verbundwerkstoffschmelze vor der Extrudermischzone ein Triebmittel über eine Gasdosiereinrichtung zugeführt wird. Der Schritt der Herstellung der Verbundwerkstoffschmelze und der Einbringung des Triebmittels kann auch in einem Prozesschritt erfolgen. Als Extrudermischzone wird jener Extruderabschnitt aufgefasst, der einem etwaigen Mischteil der Extruderschnecke zugeordnet ist. Demgemäß wird das Triebmittel der Schmelze in dem Extruderabschnitt zugeführt, der bezüglich der Längsachse dem Mischteil in Förderrichtung vorgelagert ist.

Ein erfindungsgemäßer Holz-Kunststoff-Verbundwerkstoff ist als Werkstoff für Strukturbauteile einer Transportpalette, die hinsichtlich ihrer Abmessungen und Ausgestaltung an den Europool-Standard angelehnt sein kann, geeignet. Zur Herstellung von Transportpaletten werden die entsprechenden, aus einem erfindungsgemäßen Holz-Kunststoff-Verbundwerkstoff gefertigten Strukturbauteile wenigstens teilweise miteinander vernagelt, insbesondere mithilfe eines Druckluft- oder Stauchkopfnaglers.

### Wege zur Ausführung der Erfindung

### Ausführungsbeispiel 1:

Ein erfindungsgemäßer Holz-Kunststoff Verbundwerkstoff umfasst ein langkettenverzweigtes Polypropylen (WB140HMS) als Matrix mit einem Massenanteil von 67 %, Holzmehlfasern (Lignocel C120) mit einem Massenanteil von 30 %, sowie einen Haftvermittler (Scona TPPP 8112) mit einem Massenanteil von 3 %.

Zur Herstellung des Holz-Kunststoff-Verbundwerkstoffes wird beispielsweise ein Einschneckenextruder (50 mm Durchmesser) eingesetzt, der mit einer kernprogressiven Schnecke mit zusätzlichem Mischteil ausgestattet ist. Die Beladung der Schmelze mit dem Treibgas Kohlendioxid erfolgt über eine Gasdosierstation, wobei das Treibgas der Schmelze bezüglich der Förderrichtung vor dem Mischteil zugeführt wird. Die Massetemperaturen entlang der Schnecke werden im Bereich von 175 bis 195 °C eingestellt, der Massedurchsatz beträgt dabei etwa 10 kg / Stunde. Das Extrudat wird durch eine Profildüse extrudiert und in Folge gekühlt und abgezogen.

Der Holz-Kunststoff Verbundwerkstoff weist eine Verbundwerkstoffdichte von 0,06 g / cm³ auf. Der E-Modul wurde mittels eines ISO 178 Biegeversuches bei Raumtemperatur sowie einer Prüfgeschwindigkeit von 1 mm / s bestimmt und beträgt 800 MPa. Die erzielte Biegefestigkeit liegt bei 16 MPa.

### Ausführungsbeispiel 2:

Ein erfindungsgemäßer Holz-Kunststoff Verbundwerkstoff umfasst einen Polymerblend als Matrix mit einem Massenanteil von 67 %, Holzmehlfasern (Lignocel C120) mit einem Massenanteil von 30 %, sowie einen Haftvermittler (Scona TPPE 5002 GALL) mit einem Massenanteil von 3 %. Der Polymerblend selbst umfasst ein Polyethylen niedriger Dichte (PE-LD Rezyklat) mit einem Massenanteil von 70 % am Polymerblend und ein Polyamid 6 mit einem Massenanteil von 30 % am Polymerblend. Das eingesetzte Polyamid 6 weist eine Schmelztemperatur von 215° C auf.

Die Herstellung kann analog zu Ausführungsbeispiel 1 erfolgen. Bei einer Verarbeitungstemperatur im Bereich von 175 bis 195° C liegt die Schmelztemperatur des eigesetzten Polyamid 6 demnach 20 bis 40° C über der Verarbeitungstemperatur.

Der Holz-Kunststoff Verbundwerkstoff weist eine Verbundwerkstoffdichte von 0,08 g / cm³ auf. Der E-Modul wurde mittels eines ISO 178 Biegeversuches bei Raumtemperatur sowie einer Prüfgeschwindigkeit von 1 mm / s bestimmt und beträgt 620 MPa. Die erzielte Biegefestigkeit liegt bei 7 MPa.

## Patentansprüche

1. Holz-Kunststoff-Verbundwerkstoff für miteinander vernagelbare Strukturbauteile von Transportpaletten, mit einer mittels eines Triebmittels geschäumten Matrix, Holzmehlfasern und einem Haftvermittler, **dadurch gekennzeichnet, dass** die ein langkettenverzweigtes Polyolefin umfassende Matrix einen Massenanteil von mindestens 30 %, die eine Partikelgröße von 70 - 150 µm umfassenden Holzmehlfasern einen Massenanteil von 20 - 40 % und der Haftvermittler einen Massenanteil von 1 - 5 % am Holz-Kunststoff-Verbundwerkstoff aufweisen, wobei die Verbundwerkstoffdichte unter 0,3 g / cm³ beträgt.

2. Holz-Kunststoff-Verbundwerkstoff nach Anspruch 1, **dadurch gekennzeichnet, dass** das langkettenverzweigte Polyolefin ein Polyethylen oder ein Polypropylen ist.

3. Holz-Kunststoff-Verbundwerkstoff nach Anspruch 1 oder 2, **gekennzeichnet durch** einen E-Modul von 500 bis 1000 MPa.

4. Holz-Kunststoff-Verbundwerkstoff nach einem der Ansprüche 1 bis 3, **dadurch gekennzeichnet, dass** die Matrix ein Polymerblend eines Polyolefins und wenigstens eines thermoplastischen Polymers ist, wobei der Massenanteil des wenigstens einen thermoplastischen Polymers 5 - 50% am Polymerblend beträgt und wobei das wenigstens eine thermoplastische Polymer eine Schmelztemperatur aufweist, die 20 - 70°C oberhalb der Verarbeitungstemperatur des Polyolefins liegt, und / oder eine Glasübergangstemperatur aufweist, die bis zu 40°C unterhalb der Verarbeitungstemperatur des Polyolefins liegt.

5. Holz-Kunststoff-Verbundwerkstoff nach Anspruch 4, **dadurch gekennzeichnet, dass** das wenigstens eine thermoplastische Polymer ein thermoplastisches Polykondensat ist.

6. Holz-Kunststoff-Verbundwerkstoff nach Anspruch 5, **dadurch gekennzeichnet, dass** das Polykondensat ein Polyamid und / oder ein thermoplastischer Polyester ist.

7. Holz-Kunststoff-Verbundwerkstoff nach Anspruch 5 oder 6, **dadurch gekennzeichnet, dass** das Polykondensat ein Polyamid 6, ein Polycarbonat, ein Polyethylenterephthalat und / oder ein Polybutylenterephthalat ist.

8. Verfahren zur Herstellung eines Holz-Kunststoff-Verbundwerkstoffes nach einem der vorangegangenen Ansprüche über einen zweistufigen Schneckenextrusionsprozess, **dadurch gekennzeichnet, dass** in einem ersten Schritt zunächst die Matrixschmelze, die Holzmehlfasern und der Haftvermittler zu einer Verbundwerkstoffschmelze vermengt werden, wonach in einem zweiten Schritt die Verbundwerkstoffschmelze bei einer Massetemperatur zwischen 170 und 200 °C und bei einem Massedurchsatz von 5 bis 15 kg / Stunde homogenisiert und extrudiert wird, wobei der Verbundwerkstoffschmelze vor der Extrudermischzone ein Triebmittel über eine Gasdosiereinrichtung zugeführt wird.

9. Transportpalette mit Strukturbauteilen, die aus einem Holz-Kunststoff-Verbundwerkstoff nach einem der Ansprüche 1 bis 7 gefertigt sind, **dadurch gekennzeichnet, dass** die Strukturbauteile wenigstens teilweise miteinander vernagelt sind.

## Claims

1. Wood-plastic composite for structural components of transport pallets which can be nailed together, having a matrix foamed by means of a propellant, wood flour fibres and an adhesion promoter, , **characterised in that** the matrix comprising a long-chain branched polyolefin has a mass fraction of at least 30%, the wood flour fibres comprising a particle size of 70 - 150 µm have a mass fraction of 20-40% and the adhesion promoter has a mass fraction of 1 - 5% of the wood-plastic composite, wherein the composite density is less than 0.3 g/cm³.

2. Wood-plastic composite according to claim 1, **characterised in that** the long-chain branched polyolefin is a polyethylene or a polypropylene.

3. Wood-plastic composite according to claim 1 or 2, **characterised by** a modulus of elasticity of 500 to 1000 MPa.

4. Wood-plastic composite according to one of claims 1 to 3, **characterized in that** the matrix is a polymer blend of a polyolefin and at least one thermoplastic polymer, wherein the mass fraction of the at least one thermoplastic polymer is 5-50% of the polymer blend, and wherein the at least one thermoplastic polymer has a melting temperature which is 20-70°C above the processing temperature of the polyolefin, and/or has a glass transition temperature which is up to 40°C below the processing temperature of the polyolefin.

5. Wood-plastic composite according to claim 4, **characterised in that** the at least one thermoplastic polymer is a thermoplastic polycondensate.

6. Wood-plastic composite according to claim 5, **characterised in that** the polycondensate is a polyamide and/or a thermoplastic polyester.

7. Wood-plastic composite according to claim 5 or 6, **characterised in that** the polycondensate is a polyamide 6, a polycarbonate, a polyethylene terephthalate and/or a polybutylene terephthalate.

8. Method for producing a wood-plastic composite according to one of the preceding claims via a two-stage screw extrusion process, **characterised in that**, in a first step, the matrix melt, the wood flour fibres and the adhesion promoter are first mixed to form a composite melt, whereupon, in a second step, the composite melt is homogenised and extruded at a mass temperature of between 170 and 200°C and at a mass throughput of 5 to 15 kg/hour, wherein a propellant is fed to the composite melt via a gas dosage device before the extruder mixing zone.

9. Transport pallet with structural components made from a wood-plastic composite according to one of claims 1 to 7, **characterised in that** the structural components are at least partially nailed together.

## Revendications

1. Composite bois-plastique pour éléments structurels de palettes de transport pouvant être assemblés par clouage, comprenant une matrice expansée à l'aide d'un agent gonflant, des fibres de farine de bois et un agent d'adhésion, **caractérisé en ce que** la matrice comprenant une polyoléfine à longue chaîne ramifiée représente une proportion massique d'au moins 30 %, les fibres de farine de bois comprenant une taille de particules de 70 à 150 µm représentent une proportion massique de 20 à 40 % et l'agent d'adhésion représente une proportion massique de 1 à 5 % du composite bois-plastique, la densité du composite étant inférieure à 0,3 g/cm³.

2. Composite bois-plastique selon la revendication 1, **caractérisé en ce que** la polyoléfine à longue chaîne ramifiée est un polyéthylène ou un polypropylène.

3. Composite bois-plastique selon la revendication 1 ou 2, **caractérisé par** un module d'élasticité de 500 à 1000 MPa.

4. Matériau composite bois-plastique selon l'une des revendications 1 à 3, **caractérisé en ce que** la matrice est un mélange de polymères d'une polyoléfine et d'au moins un polymère thermoplastique, la proportion massique dudit au moins un polymère thermoplastique étant comprise entre 5 et 50 % du mélange de polymères et ledit au moins un polymère thermoplastique présentant une température de fusion qui est supérieure de 20 à 70 °C à la température de transformation de la polyoléfine, et/ou une température de transition vitreuse qui est inférieure de jusqu'à 40 °C à la température de transformation de la polyoléfine.

5. Composite bois-plastique selon la revendication 4, **caractérisé en ce que** le au moins un polymère thermoplastique est un polycondensat thermoplastique.

6. Composite bois-plastique selon la revendication 5, **caractérisé en ce que** le polycondensat est un polyamide et/ou un polyester thermoplastique.

7. Composite bois-plastique selon la revendication 5 ou 6, **caractérisé en ce que** le polycondensat est un polyamide 6, un polycarbonate, un polyéthylène téréphtalate et/ou un polybutylène téréphtalate.

8. Procédé de fabrication d'un matériau composite bois-plastique selon l'une des revendications précédentes, utilisant un processus d'extrusion à vis sans fin en deux étapes, **caractérisé en ce que**, dans une première étape, la matrice fondue, les fibres de farine de bois et l'agent d'adhésion sont d'abord mélangés pour former un matériau composite fondu, après quoi, dans une deuxième étape, le composite fondu est homogénéisé et extrudé à une température de masse comprise entre 170 et 200 °C et à un débit massique de 5 à 15 kg/heure, un agent gonflant étant ajouté au composite fondu avant la zone de mélange de l'extrudeuse par l'intermédiaire d'un dispositif de dosage de gaz.

9. Palette de transport avec des éléments structurels fabriqués à partir d'un matériau composite bois-plastique selon l'une des revendications 1 à 7, **caractérisée en ce que** les éléments structurels sont au moins partiellement cloués les uns aux autres.
